# EUROPEAN PATENT APPLICATION

(11) **EP 0 586 017 A1**
(43) Date of publication of application: **09.03.1994**
(21) Application number: 93202564.6
(22) Date of filing: 02.09.1993
(51) Int. Cl.: C07F 9/568, C07F 9/6558, C07F 9/6561

(54) **Heterocyclic compounds**

(30) Priority: 04.09.1992 GB 9218781
(71) Applicant: GLAXO S.p.A., I-37100 Verona (IT)
(72) Inventor: Perboni, Alcide, F-37100 Verona (IT); De Magistris, Elisabetta, F-37100 Verona (IT)
(74) Representative: Filler, Wendy Anne, Dr.

(57) **Abstract**

The present invention provides compounds of the general formula (I) 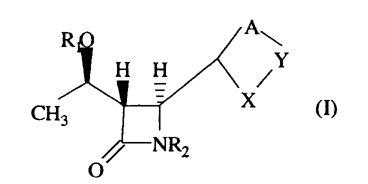
in which R₁ represents a hydrogen atom or a hydroxyl protecting group; R₂ represents a hydrogen atom, or a trialkylsilyl group; A represents the group (CH₂)_{q}B(CH₂)ₚ wherein B represents oxygen (O), NH or a substituted or protected derivative thereof, or S(O)ₙ wherein n is zero 1, or 2; q is zero or an integer from 1 to 4; p is zero or an integer from 1 to 4; with the proviso that the sum of p + q is an integer from 1 to 4; or B represents a bond and the sum of p + q is 2, 4 or 5; and -X-Y represents the alkene group (II) or the epoxide group (III). 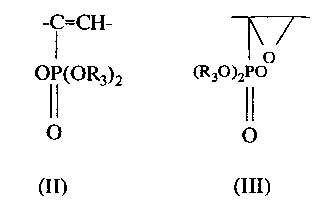
wherein R₃ represents a C₁₋₆alkyl group optionally substituted by halogen or an optionally substituted phenyl group; and processes for their preparation.

## Description

This invention relates to heterocyclic compounds useful in the preparation of compounds having antibacterial activity, and to processes for their preparation.

Thus the present invention provides compounds of the general formula (I) 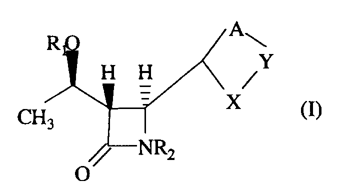
in which R₁ represents a hydrogen atom or a hydroxyl protecting group; R₂ represents a hydrogen atom, or a trialkylsilyl group; A represents the group (CH₂)_{q}B(CH₂)ₚ wherein B represents oxygen (O), NH or a substituted or protected derivative thereof, or S(O)ₙ wherein n is zero 1, or 2; q is zero or an integer from 1 to 4; p is zero or an integer from 1 to 4; with the proviso that the sum of p + q is an integer from 1 to 4; or B represents a bond and the sum of p + q is 2, 4 or 5; and -X-Y represents the alkene group (II) or the epoxide group (III). 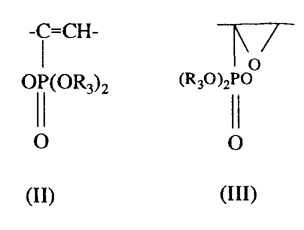
wherein R₃ represents a C₁₋₆alkyl group optionally substituted by halogen or an optionally substituted phenyl group.

Suitable hydroxyl protecting groups R₁ include those which may be removed by hydrolysis under buffered conditions or under non-aqueous conditions.

When the group OR₁ is a protected hydroxyl group this is conveniently an ether or an acyloxy group. Examples of particularly suitable ethers include those in which R₁ is a hydrocarbylsilyl group such as trialkylsilyl, e.g. tri(C₁₋₆alkyl)silyl such as trimethylsilyl or more especially t-butyldimethylsilyl. When the group OR₁ represents an acyloxy group then examples of suitable groups R₁ includes alkanoyl e.g. acetyl or pivaloyl; alkenoyl e.g. allylcarbonyl; aroyl e.g. p-nitrobenzoyl; alkoxycarbonyl e.g. t-butoxycarbonyl; haloalkoxycarbonyl e.g. 2,2,2-trichloroethoxycarbonyl, or 1,1,1-trichloro-2-methyl-2- propoxycarbonyl; aralkyloxycarbonyl e.g. benzyloxycarbonyl or P-nitrobenzyloxycarbonyl; or alkenyloxycarbonyl e.g. allyloxycarbonyl.

When R₂ represents a trialkylsilyl group this is preferably a tri(C₁₋₆)alkylsilyl group such as trimethylsilyl or t-butyldimethylsilyl.

When B represents a protected or substituted nitrogen atom this may be for example a nitrogen atom substituted by an alkoxycarbonyl, aralkyloxycarbonyl or allyloxycarbonyl group.

When B represents a heteroatom or hetero group the heteroatom or hetero group is preferably O, or S(O)ₙ.

Examples of suitable A groups include -CH₂O-, -CH₂OCH₂-, -CH₂S-,-CH₂-S-CH₂-, -O(CH₂)₂-, -S(CH₂)₂-, (CH₂)₂, (CH₂)₃ or (CH₂)₄.

Preferably A represents -(CH₂)₂- or -CH₂OCH₂-.

When R₃ represents C₁₋₆alkyl examples of suitable groups include methyl, ethyl, propyl, isopropyl, butyl and pentyl.

When R₃ represents a C₁₋₆alkyl group substituted by halogen the halogen may be fluorine, chlorine or bromine. Examples of suitable haloalkyl groups include mono, di and trichloralkyl such as trichloroethyl
When R₃ represents an optionally substituted phenyl group this may be for example a phenyl group optionally substituted by one or more groups selected from C₁₋₃alkyl e.g. methyl, halogen e.g. chlorine or alkoxy e.g. methoxy. For example R₃ may be phenyl, chlorophenyl or 3,5-dimethylphenyl.

Preferably R₃ is a group selected from methyl, ethyl, propropyl, isopropyl, butyl, pentyl, 2,2,2-trichloroethyl, phenyl, 2-chlorophenyl or 3,5-dimethyl phenyl.

The two R₃ groups may be the same or different.

Most preferably R₃ is C₁₋₄alkyl and in particular ethyl.

In formula I the solid wedge shaped bond indicates that the bond is above the plane of the paper. The broken wedge shaped bond indicates that the bond is below the plane of the paper.

In addition to the fixed stereochemical arrangement as defined in formula (I) the molecule contains at least one further centre of asymmetry, and when X-Y is the epoxide group (III) there are also two additional centre of asymmetry. All stereoisomers including mixtures thereof arising from these additional asymmetric centres are within the scope of the compounds of formula (I). The specific stereoisomers of formula (I) may be represented by formulae (1a) to (1f). 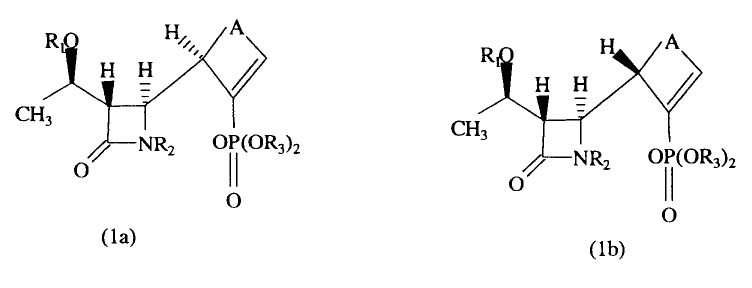 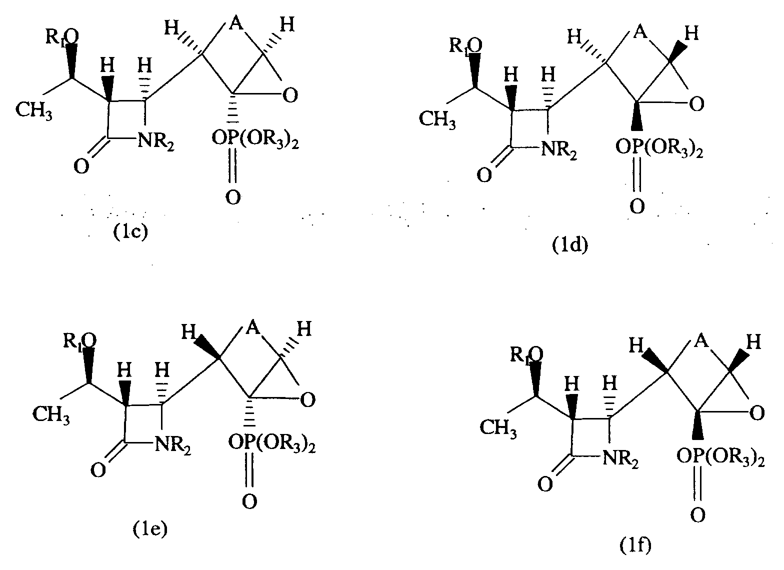
A preferred class of compounds of formula (I) are the particular isomers as represented by formula (1a) and (1c).

Preferred compounds of formula (I) are those wherein R₁ represents a hydroxyl protecting group more particularly a trialkylsilyl group such as trimethylsilyl or t-butyldimethylsilyl.

A further preferred group of compounds of formula (I) are those wherein R₂ represent a hydrogen atom or a tri-(C₁₋₄)alkyl silyl group and in particular a t-butyldimethylsilyl or trimethylsilyl group.

A further preferred group of compounds of formula (I) are those wherein R₃ is a C₁₋₄alkyl group and most preferably both R₃ groups are the same e.g. ethyl

A particular preferred class of compounds of formula (I) are the stereoisomers of formula (1a) and (1c) wherein R₁ represents a tri(C₁₋₄)alkylsilyl group such as trimethylsilyl or t-butyldimethylsilyl; R₂ represents hydrogen, t-butyldimethylsilyl, or trimethylsilyl; R₃ represents C₁₋₄alkyl such as ethyl; A represents -(CH₂)₂-.

More particularly for the compounds of formula (1c) especially preferred compounds are those wherein R₂ represents a hydrogen atom.

A further particularly preferred class of compounds of formula (I) are the stereoisomers of formula (1a) and (1c) wherein R₁ represents a tri(C₁-₄)alkylsilyl group such as trimethyl silyl or t-butyldimethylsilyl. R₂ represents hydrogen, t-butyldimethyl silyl or triemethyl silyl; R₃ represents C₁₋₄alkyl such as ethyl; A represents -CH₂OCH₂-.

The compound of formula (I) in which R₁ represents a hydroxyl protecting group and X-Y represent the epoxide group (III) may be prepared by epoxidation of the corresponding compound of formula (I) in which X-Y represents the alkene group (II).

The epoxidation may conveniently be carried out by treating a compound of formula (I) wherein X-Y is the alkene group (II) with a percid. Suitable peracids include optionally substituted perbenzoic acids such as perbenzoic acid or meta chloroperbenzoic acid, peralkanoic acids such as peracetic acid and trifluoroperacetic acid. The reaction may be carried out in a solvent such as a halohydrocarbon e.g. dichloromethane and conveniently at a temperature within the range -30 to +30⁰C.

For the preparation of the epoxides as represented by formulae (1c) and (1e) the reaction is preferably carried out using the corresponding alkene formulae (1a) or (1b) in which R₂ represents hydrogen. For the preparation of epoxides as represented by formulae (1d) and (1f) the epoxidation is preferably carried out using a cycloalkene of formula (1a) or (1b) wherein R₂ is trialkylsilyl.

Compounds of formula (I) wherein R₁ is a hydroxyl protecting group and X represents the alkene group (II) may be prepared treating the ketone (IV) in which R₂ is a trialkylsilyl group. 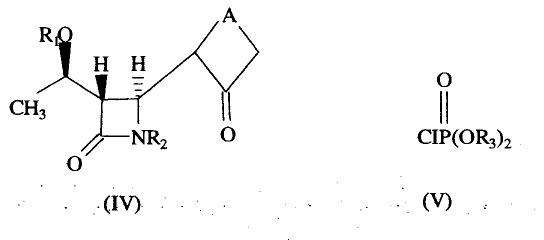
with a strong base such as a potassium or lithium bis(trimethylsilylamide) and then reacting the enolate ion thus formed with the chlorophospate (V) followed by hydrolysis of the N-trialkylsilyl protecting group if desired.

Compounds of formula (I) wherein R₂ represents a hydrogen atom may be prepared from compounds of formula (I) wherein R₂ is a trialkylsilyl group by hydrolysis using conventional procedures for the removal of such groups. Thus for example compounds wherein R₂ is t-butyldimethylsilyl may be hydrolysed by reaction with potassium fluoride in methanol.

Compounds of formula (I) in which R₁ represents a hydrogen atom may be prepared from a compound in which R₁ represents a hydroxyl protecting group by the use of conventional procedures for the removal of such groups.

Compounds of formula (I) in which R₁ represents a hydroxyl protecting group, including those containing an alkenyl moiety, may be prepared from the compound of formula (I) in which R₁ represents a hydrogen atom using conventional procedures for preparing such protected hydroxyl functions.

In formulae (I) and (IV) shown above when there is an asymmetric carbon atom and no specific configuration is shown then the formula includes all possible configurations.

Specific stereoisomers of the compounds of formula (I) as defined in formulae (1a), (1b), (1c), (1d), (1e), and (1f) essentially free of the other stereoisomers may be prepared by using the general processes described above starting with the appropriate stereoisomer of formula (IV) and the required substituents R₂.

The compounds of formula (I) are useful intermediates for the preparation of compounds having useful antibacterial activity. Thus the compounds of formula (I) may be used to prepare antibacterial compounds falling within the generic disclosure in EP-A-0422596A. For example the compounds (1) may be used to prepare compounds of formula (VI) 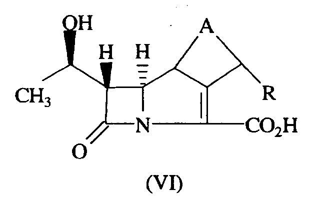
in which R is an alkoxy group e.g. methoxy, or an optionally substituted amino group, and salts thereof. These compounds exhibit a broad spectrum of antibacterial activity against a wide range of pathogenic microorganisms and have a very high resistance to all β-lactamases.

Compounds of the general formula (VI) may be readily prepared from compounds of formula (VII) by the general cyclisation procedures described in EP-A-0422596A 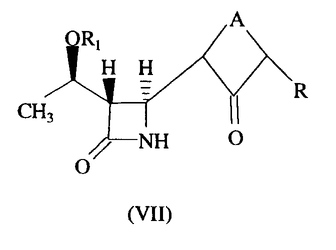
Compounds of formula (VII) may be advantageously prepared from the compound of formula (I) wherein -X-Y is the epoxide group (III) by reaction with the appropriate alcohol or amine RH, followed by removal of the N protecting group R₂ if appropriate.

In the above reactions the use of a specific stereoisomer of formula (I) as starting material will give a specific isomer of the compounds of formula (VI) which may then be converted into a specific isomer of a compound of formula (VI). Thus the epoxides of formula (1c) and (Id) will give compounds of formula (V1a) and (VIb) respectively. 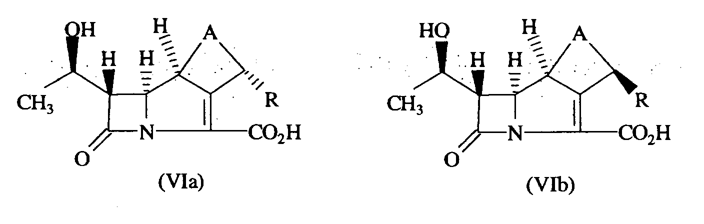
The compounds of formula (VIa) (wherein A is an ethylene, butylene or pentylene chain) and formula (VIb) (wehrein A is a chain containing a heteroatom) are particularly useful antibacterial agents and thus the respective compounds of formula (Ic) and (Id) represent particularly preferred features of the invention.

The compounds of formula (VIa) and in particular those wherein A is (CH₂)₂ and R is methoxy are novel compounds with a particarly advantageous profile of antibacterial activity and represent a further aspect of the invention.

In order that the invention may be be more fully understood the following examples are given by way of illustration only.

In the Preparation and Examples, unless otherwise stated:
Melting points (m.p.) were determined on a Gallenkamp m.p. apparatus and are uncorrected. All temperatures refer to ⁰C.

Infared spectra were measured in chloroform-d₁ solutions on a FT-IR instrument. Proton Magnetic Resonance (1H-NMR) spectra were recorded at 300 MHz as solutions in chloroform-d₁. Chemical shifts are reported in ppm downfield (δ) from Me₄si, used as an internal standard. The abbreviation MCPBA refers to metachloroperbenzoic acid. THF is tetrahydrofuran.

### Intermediate 1

### (3S,4R)-3-[(R)-1-(t-Butyldimethylsilyloxy)ethyl]-4[2'-(1'-(oxocyclopentyl))]-azetidin-2-one.

To a stirred solution of lithium bishexamethyldisilylamide (230 ml 1M in hexanes), cyclopentanone (18 ml) was added dropwise at 70⁰ under nitrogen atmosphere. To this mixture was added a solution of (3S,4R)-3[(1R)-1-(t-butyldimethylsilyloxy)ethyl]-4-acetoxy-azetidin-2-one (28.7 g) in dry THF (100 ml) keeping the temperature below -70⁰C. The reaction was quenched after 20 min using a mixture of 5% hydrochloric acid (50 ml) and 50% ammonium chloride (50 ml), extracted with ethyl acetate (3x100 ml) and washed with brine (100 ml). The organic phase was then dried over sodium and concentrated under reduced pressure to give an oil which was purified by flash chromatography eluting with a mixture of cyclohexane and ethyl acetate in a 50/50 ratio furnishing the title compound as a mixture of isomers (22.5 g, RF=0.6 cyclohexane/ethyl acetate 1/1).
IR γmax(cm-¹):3414(NH), 1757(C=O β-lactam), 1738(C=O). ¹H-NMR (δ, ppm, CDCl₃):6.48(s), 5.79(s), 4.24-4.14(m), 4.12(dd), 3.54(dd), 3.48(m), 2.94(m), 2.82(m), 2.48-2.30(m), 2.30-2.00(m), 2.00-1.60(m), 1.21(d), 31.20(d), 0.87(s), 0.86(s), 0.073(s), 0.066(s).

### Intermediate 2

### (3S,4R)-1-(t-Butyldimethylsilyl)-3[(1R)-1-(t-Butyldimethylsilyloxy)ethyl]-4-[2'(S)-1'-(oxocyclopentyl)]-azetidin-2-one(2a)

### (3S,4R)-1-(t-Butyldimethylsilyl)-3[(1R)-1-(t-Butyldimethylsilyloxy)ethyl]-4-[2'(R)-1'-(oxocyclopentyl)]-azetidin-2-one (2b)

To a solution of intermediate (1)(14 g) in dry dichloromethane (200ml) under a nitrogen atmosphere, terbutyldimethylsilylchloride (13.5g) and triethylamine (12.5 ml) were added at room temperature. After two days the solution was diluted with dichloromethane (700 ml) and washed with 2% hydrochloridric acid (100 ml) and water (2x100 ml). The organic phase was then dried over sodium sulphate, concentrated under reduced pressure and purified by flash chromatography using a mixture of cyclohexane and diethylether in a 85/15 ratio, obtaining two fractions: (a) a mixture of both isomers as a white solid (15 g) from which a second chromatographic separation afforded the title compound (2a), (3g); (b) the title compound (2b) as a white solid (2.5 g,RF=0.45 cyclohexane/diethyl ether 8/2)
Title compound (2a): IR γmax(cm⁻¹):1736(C=O). ¹H-NMR (δ, ppm, CDCl₃):4.18-4.08(m), 2.868(dd), 2.570(m), 2.42-2.28(m), 2.22-2.06(m), 2.06-1.80(m), 1.084( d),0.964(s), 0.883(s), 0.249(s), 0.210(s), 0.069(s), 0.050 (s).
Title compound (2b):IR γmax(cm⁻¹):1736(C=O). ¹H-NMR (δ, ppm, CDCl₃):4.047(m),3.970(m), 2.841(dd), 2.42-2.30(m), 2.20-2.06(m), 1.94-1.80(m), 1.254(d),0.951(s), 0.875(s), 0.278 (s), 0.088(s), 0.080(s), 0.060 (s).

### Intermediate 3

### (3S,4R,3'S)-3-[(R)-1-(tert-butyldimethylsilyloxy)ethyl]-4-[3'-(4'-oxo-tetrahydropyranyl)]azetidin-2-one, 3a and (3R,4R,3'R)-3-[(R)-1-(tert-butyldimethylsilyloxy)ethyl]-4-[3'-(4'-oxo-tetrahydropyranyl)]azetidin-2-one,3b

A 1M solution of lithium bis(trimethylsilyl)amide in hexane (220 ml) was added to tetrahydrofuran (380ml), the mixture was cooled to -70⁰C and a solution of tetrahydro-4H-pyran-4-one (15 g) in tetrahydrofuran (55 ml) was added dropwise. The mixture was stirred for 30 min, then (3R,4R)-4-acetoxy-3-[(R)-(tert-butyl dimethylsilyloxy)ethyl]-2-azetidinone (28.75 g) was quickly added. After 200 min the reaction mixture was poured into a saturated ammonium chloride solution (500 ml) and the resulting mixture extracted with ethyl acetate (600 ml). The organic layer was washed with a 2.5% ice-cold solution of hydrochloric acid (2 x 250 ml), brine (2 x 300ml), then dried and evaporated under reduce pressure to give the title compound as a crude mixture (approximately 1:1) of the 3a and 3b isomers (34 g). The crude compound was chromatographed on silica gel using ethylacetate as eluant, to afford 13 g of a mixture of 3'S and 3'R isomers. The isomers were separated by crystallisation with cyclohexane(250 ml) obtaning the precipitation of the pure title compound 3a (4g, Rf=0.2 in ethylacetate) and recovering from the mother liquors the title compound 3b (4g, Rf= 0.17 in ethylacetate).
Intermediate 3a : IR (CDCl₃) γmax (cm⁻¹): 3414 (NH), 1763(C=O lactam),1720 (C=O). ¹H-NMR δ (CDCl₃) : 5.7 8 (bs); 4.3-4.14 (m); 4.19 (dd); 4.3-4.27 (m); 4.25-4.14 (m); 3.80 (m); 3.73 (dd) 2.95 (dd); 2.77 (m) ; 2.72-2.58 (m); 2.46 (dt); 1.20 (d); 0.87 (s); 0.075 (s); 0.06 (s)ppm.
Intermediate 3b: IR (CDCl₃) γmax (cm⁻¹): 3321 (NH); 1765 (C=O lactam); 1711 (C=O). ¹H-NMR δ (CDCl₃):6.172 (bs); 4.27 (m); 4.12(m); 3.71 (dt); 3.57 (dd); 3.41 (t); 2.76 (dd); 2.69 (m); 1.21 (d); 1.18 (d); 0.87 (s); 0.86 (s); 0.071 (s); 0.055(s) ppm.

### Intermediate 4

### (3 S,4R,3'S)-1-tert-butyldimethylsilyl-3-[(R)-1-(tert-butyldimethylsilyloxy)ethyl]-4-[3'-(4'-oxo-tetrahydropyranyl)] azetidin-2-one.

To an ice-cold solution of intermediate (3a) (3g) in dichloromethane (35 ml) tert-butyldimethylsilylchloride (1.648 g) and triethylamine (1.9 ml) were added. The reaction mixture was stirred for 24h then further portions of tert-butyldimethylsilyl chloride (0.5 g) and triethylamine (0.57ml) were added. The mixture was stirred for 3h then poured in a 2% ice-cold solution of sodium hydrogen carbonate (2x50ml), washed with water and brine (3x50 ml), dried and evaporated under vacuum. The crude compound was chromatographed on silica gel using a mixture of petrol and diethyl ether (1/1) as eluant, to afford the title compound (2.95 g ;Rf=0.85 in diethyl ether) as a white solid and about 4% of the starting material
IR (CDCl₃) γmax (cm⁻¹): 1742(C=O lactam). ¹H-NMR δ (CDCl₃) : 4.25-4.15 (m); 4.04 (m); 3.87 (t); 3.76 (dt); 3.64 (dd); 3.102 (dd); 2.88 (m); 2.65-2.53 (m); 2.42 (dt); 1.22 (d); 0,94 (s); 0.86 (s); 0.25 (s);0.127 (s);0.074(s); 0.049 (s)ppm.

### Intermediate 5

### (3S,4R,3'R)-1-tert-butyldimethylsilyl-3-[(R)-1-(tert-butyldimethylsilyloxy)ethyl]-4-[3'-(4'-oxo-tetrahydropyranyl)] azetidin-2-one.

To an ice-cold solution of intermediate (3b) (3g) in dichloromethane (35 ml) tert-butyldimethylsilylchloride (1.64 g) and triethylammine (1.9 ml) were added. The reaction mixture was stirred for 24h then further portions of tert-butyldimethylsilyl chloride (0.5g) and triethylammine (0.57ml) were added. The mixture was stirred for 3h then poured into a 2% ice-cold solution of sodium hydrogencarbonate (2x50ml), washed with water and brine (3x50 ml), dried and evaporated under vacuum. The crude compound was chromatographed on silica gel using a mixture of petrol and diethyl ether (6/4) as eluant, to afford the title compound (2.95 g, Rf= 0.8 in diethyl ether).
IR (CDCl₃) γmax (cm⁻¹): 1740 (C=O lactam). ¹H-NMR δ (CDCl₃) : 4.029 (m); 3.94 (m); 4.2-3.9 (m); 3.31 (dd); 2.76 (m); 2.7-2.4 (m); 1.26 (d); 0,96 (s); 0.88 (s); 0.26 (s);0.19 (s);0.083 (s); 0.044 (s)ppm.

### Example 1

### (3S,4R)-3-[(1R)-1-(t-Butyldimethylsilyloxy)ethyl]-4-[5'(R)-1'-(diethylphosphonyloxycyclopent-1'-enyl)]-azetidin-2-one

A solution of lithium bis hexamethyldisilylamide (1M in hexanes, 12 ml) was added at -70 ^{o}C to dry THF (50 ml) and stirred. To the resulting mixture a solution of intermediate (2b)(3.2 g) in dry THF (60 ml) was added dropwise over 20min and kept under nitrogen atmosphere for 30 min. Diethylphosphonylchloride (1.6 ml) was added at -70 ^{o}C and the reaction mixture quenched after 30 min with a saturated solution of ammonium chloride. The mixture was then extracted with ethyl acetate (3x200 ml) and washed with 2% acetic acid (2x 200 ml), 5% sodium bicarbonate (2x200 ml), brine (100 ml). The organic phase was dried, concentrated under reduced pressure and the residue redissolved in methanol (60 ml). To this mixture potassium fluoride (2.1 g) was then a dded and stirred at room temperature for 20 min. The solvent was then evaporated and the crude solid redissolved in ethyl acetate (300 ml) washed with brine (50 ml), dried, concentrated under reduced pressure and the crude oil purified by flash chromatography eluting with a mixture of cyclohexane and ethyl acetate in a 20/80 ratio to give the title compound as an oil (1.65 g,RF=0.3 cyclohexane/ethyl acetate 2/8).
IR γmax(cm⁻¹):1757(C=O β-lactam), 1265(P=O), 1036(P-O-C). ¹H-NMR (d, ppm, CDCl₃):5.89(s), 4.21-4.08 (m), 3.96(t), 2.99(m), 2.79(dd), C2.34-2.28(m), 2.04-1.82(m), 1.37(t), 1.23(d), 0.88(s),0.08(s).

### Example 2

### (3S,4R)-3[(1R)-1-(t-Butyldimethylsilyloxy) ethyl]-4-[5'(R)-1'-(diethylphosphonyloxy)-1',2'-(epoxy)-cyclopent-1'-enyl)]-azetidin-2-one

To a solution of Example 1 (1.6 g) in dichloromethane (60 ml), sodium bicarbonate (800 mg) and 3-chloroperoxybenzoic acid (3 g) were added at room temperature and the reaction mixture was stirred for 3 hrs. The reaction was quenched using a 10% solution of sodium thiosulphate (100 ml) and extracted with dichloromethane (3x200 ml), washed with 5% sodium bicarbonate (2x100 ml) and dried. The organic phase was concentrated to give a white solid containing the title compound (2 g, RF=0.4 cyclohexane ethylacetate 4/6). IR γmax(cm⁻¹):1755(C=O β-lactam), 1659(C=C), 1259(P= O), 1038(P-O-C). ¹H-NMR (δ, ppm, CDCl₃):5.96(s), 5.41(s), 4.23-4.12 (m), 2.97-2.94(m), 2.65-2.58(m), 2.00-1.80(m), 1.78-1.58(m), 1.58-1.40(m), 1.38-1.32(m), 1.24(d), 88(s), 0:09(s).

### Example 3

### (3S,4R)-3-[(1R)-1-(t-Butyldimethylsilyloxy)ethyl]-4-[2'(S)methoxy-1'-(oxo)-5'(R)-cyclopentyl)]-azetidin-2-one

Example 2 (2 g), was dissolved in dry methanol (60 ml) and stirred under nitrogen atmosphere. To this mixture was then added 2,6- lutidine (2.5 ml) and heated at reflux for 5hrs. The reaction was allowed to cool to room temperature and was concentrated to give an oil which was dissolved in diethylether (300 ml) and washed with a pH=3 buffered solution ( 100 ml). The organic layer was dried over sodium concentrated and purified by flash chromatography eluting with a mixture of ethyl acetate and cyclohexane in a 50/50 ratio to give the title compound as an oil (600 mg, RF=0.5 cyclo hexane/ethyl acetate 3/7)
IR γmax(cms-¹):3408(NH), 1755(C=O β-lactam), ¹H-NMR (d,ppm, CDCl₃):5.82(s), 4.19(m), 4.10(dd), 3.68-3.56(m), 3.50(s), 2.96(dd), 2.50(m), 2.5-2.1(m),,2.0-1.5(m), 1.2(d), 0.86(s), 0.06(s).

### Example 4

### (3S,4R)-1-(1-allyloxycarbonyl-1-triphenylphosphoranylidenemethyl)-3-[(1R)-1-(t-Butyldimethylsilyloxy)ethyl]-4-[2'(S)methoxy-1'-(oxo)-5'(R)-cyclopentyl)]-azetidin-2-one

Example 3 (600mg) was dissolved in toluene (10 ml) allylgloxalaldehyde (350 mg) was added and the mixture heated at reflux. After three hrs the reaction was concentrated and chromatographed using a mixture of cyclohexane and ethyl acetate in a 80/20 ratio to give a yellow oil (900mg) which was dissolved in dry THF (20 ml) and cooled to -40⁰C. To this solution was added 2,6-lutidine (0.611 ml) and thionyl chloride (0.38 ml) and stirred for 20 min. The resulting mixture was filtered on celite and the salts washed three times with dry THF (3x15 ml), concentrated and redissolved in THF (50 ml) 4 times and finally concentrated under reduced pressure. The residue was redissolved in dry THF (40 ml) and 2,6-lutidine (0.3ml), triphenylphosphine (1g), sodium iodide (20mg) were added. The mixture was stirred for 30min then concentrated, redissolved in chloroform (50ml) and the solvent was removed under reduced pressure obtaining a pale yellow solid which was purified by flash chromatography eluting with a mixture of ethyl acetate and cyclohexane in a 40/60 ratio to yield the title compound as a yellowish solid (570 mg, Rf=0.3 cyclohexane/ethyl acetate 6/4).
IR γmax(cm⁻¹): 1742(C=O), 1653(C=C), 1637(C=C), 1605(C=C). ¹H-NMR (δ, pp m, CDCl₃): 7.80-7.70(m), 7.62-7.45(m), 6.06-5.86(m), 5.40-5.06(m), 4.68-4.46(m), 4.22-3.80(m), 3.61-3.58(s+s), 2.96-2.26(m), 1.98-1.86(m), 1.86-81.20(m), 1.08-0.82(m), 0.75(s), -0.07-(-0.13)(s+s).

### Example 5

### Allyl-(4S,7S,8R,9S,11R)-1-aza-4-(methoxy)-9-[1-(t-butyldimethylsilyloxy)ethyl]-10-oxotricyclo[6.2.0.03,7]-dec-2-en-2-carboxylate

Example 4 (450mg) was dissolved in dry xylene (35ml) under nitrogen atmosphere and heated at 100⁰C for 2hrs, concentrated to give an oil which was purified by flash chromatography eluting with a mixture of cyclohexane and diethylether in a 80/20 ratio to give the title compound as a colourless oil (155mg, Rf=0.7).
IR γmax(cm⁻¹): 1780(C=O β-lactam), 1722(C=O). ¹H-NMR (δ,ppm, CDCl₃): 5.95(m), 5.34(dd), 4.76(m), 4.70(m), 4.25(dd), 4.20(m), 3.53(m), 3.29(s), 3.21(dd), 2.36(m), 1.92(m), 1.3(m), 1.22(d), 0.88(s), 0.08(s), 0.07(s).).

### Example 6

### Allyl-(4S,7S,8R,9S,11R)-1-aza-4-(methoxy)-9-[1-(hydroxyethyl)]-:10-oxotricyclo[6.2.0.03,7]-dec-2-en-2-carboxylate

To a solution of Example 5 (150mg) in dry THF (15 ml) under nitrogen atmosphere was added a solution containing tetrabutylammonium fluoride (0.56ml as a 1M solution in THF), acetic acid (45µl) and THF (2.5 ml). The reaction mixture was stirred for 14 hrs, then the same amount of the above solution was added. After 50 hrs the mixture was poured onto a saturated solution of ammo nium chloride at 0⁰C and extracted with ethyl acetate (3x50 ml). The organic phase was washed with an ice cold 5% solution of sodium bicarbonate (30 ml) and ice cold brine (30 ml), dried and concentrated. The residue was purified by flash chromatography eluting with a mixture of cyclohexane and ethyl acetate in a ratio ranging from 70/30 to 30/70 to give the title compound as a wax (43 mg, Rf=0.2 cyclohexane/ethyl acetate 5/5). IR γmax(cm⁻¹): 3430(OH), 1780(C=O β-lactam), 1718(C=O). ¹H-NMR (δ, ppm, CDCl₃): 5.95(m), 5.34(dd), 4.76(m), 4.70(m), 4.25(dd), 4.20(m), 3.53(m), 3.29(s), 3.21(dd), 2.36(m), 1.92(m), 1.3(m), 1.22(d), 0.88(s), 0.08(s), 0.07(s).).

### Example 7

### Sodium-(4S,7S,8R,9S,11R)-1-aza-4-(methoxy)-9-[1-(hydroxyethyl)]-10-oxotricyclo[6.2.0.03,7]-dec-2-en-2-carboxylate

Example 6 (7mg) was dissolved in dry THF (0.5 ml) under nitrogen atmosphere, triphenylphosphine (0.5 mg), palladium tetrakistriphenyl phosphine (0.5 mg), and 2-ethylhexanoate sodium salt (40 µl) were added. After 20 minutes diethyl ether was added and a precipitate was obtained. The solid was centrifugated and washed with a 95/5 mixture of diethyl ether and tetrahydrofuran two times, decantated, dried under reduced pressure to yield the title compound as a yellowish powder (2mg).
IR γmax(cm⁻¹): 1755(C=O β-lactam), 1587(C=O, C=C). ¹H-NMR (δ, ppm, D₂O): 4.72(m), 4.13(dd), 4.10(m), 4.0-3.80(m), 3.5-3.4(m), 3.40-3.3(m), 3.30-3.10(m+s), 3.13(s), 2.9-2.78(m), 2.5-2.4(m), 2.32-2.2(m), 1.8-1.5(m), 1.25(m), 1.11(d).

### Example 8

### (3S,4R,3'S)-3-[(R)-1-(tert-butyldimethylsilyloxy)ethyl]-4-[3'-(4'-diethoxyphosphinyloxytetrahydropyran-4'-ene)]azetidin-2-one.

A 1M solution of lithium bis(trimethylsilyl)amide in hexane (6,79 ml) was added to tetrahydrofuran ( 12.5 ml), the mixture was cooled to -70⁰C under nitrogen, then the intermediate 4 (1.5 g), dissolved in tetrahydrofuran (8ml), was added over 10 min. The obtained solution was stirred for 45 min diethylchlorophosphate (1.09 ml) was added over 2min. The reaction mixture was stirr ed for 30 min, then poured into a saturated ammonium chloride solution and the resulting mixture extracted with diethyl ether. The organic layer was washed with a 10% v/v aqueous solution of acetic acid (2x50 ml), a solution of sodium hydrogen carbonate and brine, dried and evaporated to yield the crude intermediate (3S,4R,3'S)-1-tert-butyldimethylsilyl-3-[(R)-1-(tert-butyldimethylsilyloxy)ethyl]-4-[3'-(4'-diethoxyphosphinyloxytetrahydropyran-4'- ene)] azetidin-2-one (2g; Rf = 0.2 in diethyl ether). The obtained crude compound (2g) was dissolved at room temperature in methanol (50 ml) and treated with potassium fluoride (439mg). The reaction mixture was stirred for 40 min, then the solvent was partially evaporated under reduced pressure. The obtained thick suspension was poured into a saturated ammonium chloride solution and extracted with diethyl ether. The organic layer was washed with brine, dried and evaporated to give the title compound as a yellow foam (1.47 g ; Rf= 0.2 in ethyl acetate).
IR (CDCl₃ ) γmax (cm⁻¹):3414 (NH), 1759(C=O lactam),1690-1680 (C=C). ¹H-NMR δ(CDCl₃):6.00 (bs);5.7 (dd);4.3-4.1 (m);4.03 (dd);3.90-3.7 (m); 3.09 (m) 2.48 (m); 1.36 (t); 1.21 (d); 0.87 (s); 0.075 (s) ppm.

### Example 9

### (3S,4R,3'S,4'R,5'R)-3-[(R)-1-(tert-butyldimethylsilyloxy)ethyl]-4-[3'-(4'-diethoxyphosphinyloxytetrahydropyran-4'-ene oxide)]azetidin-2-one

To an ice-cold solution of Example 8 (1.47g) in dichloromethane (55ml), MCPBA (2.68g) was added. The reaction mixture was stirred at 0⁰C for 30min and room temperature for 28h, then the solvent was removed and the mixture was dissolved in ethyl acetate. The solution was poured in to an ice-cold 3% aqueous sodium sulphite solution (2x 100ml), washed with a diluite ice-cold solution of sodium hydroxide, water and brine, dried and evaporated to give a yellow oil wich was purified on silica gel using ethyl acetate, to afford the title compound (930mg; Rf=0.2 in ethylacetate).
IR (CDCl₃) γmax (cm-¹): 3450 (NH), 1761 (C=O lactam). ¹H-NMR δ (CDCl₃): 5.98 (bs);4.258 (m);4.22-4.08 (m);4.0-3.80 (m);3.57 (m);3.08 (m);2.58 (q); 1.26 (d);0.88 (s);0.089 (s) ppm.

### Example 10

### (3S,4R,3'S,5'S)-3-[(R)-1-(tert-butyldimethylsilyloxy)ethyl]-4-[5'-(3'-methoxy-4'-oxo-tetrahydropyranyl)]azetidin-2-one.

The Example 9 (900mg) was dissolved in methanol (30 ml) and heated for 4h Then the solvent was evaporated and the crude compound was dissolved in diethyl ether, washed with water and brine, dried and evaporated to give the title compound as a white solid (480mg; Rf= 0.65 in ethylacetate).
IR (CDCl₃) γmax (cm⁻¹):3412 (NH), 1765(C=O lactam),1720 (C=O). ¹H-NMR δ (CDCl3) : 5.8 (bs); 4.214 (m); 4.23-4.15 (m); 4.129 (dd); 4.052(dd); 3.86 (dd); 3.74 (dd); 3.65 (dd);3.419 (s); 3.18(m); 2.97 (dd); 1.19(d); 0.8 7 (s); 0.081 (s); 0.07 (s)ppm.

### Example 11

### (3S,4R,3'S,4'S,5'S)-1-tert-butyldimethylsilyl-3-[(R)-1-(tert-butyldimethylsilyloxy)ethyl]-4-[3'-(4'-diethoxyphosphinyloxy-tetrahydropyran-4'-ene oxide)]azetidin-2-one.

A 1M solution of lithium bis(trimethylsilyl)amide in hexane (6,79ml) was added to tetrahydrofuran (12.5 ml), the mixture was cooled to -70⁰C under nitrogen, then intermediate 4 (1.5g), dissolved in tetrahydrofuran (8ml), was added over 10 min. The obtained solution was stirred for 45 min then diethylchlorophosphate (1.09 ml) was added over 2min. The reaction mixture was stirred for 30min, poured into a saturated ammonium chloride solution and the resulting mixture extracted with diethyl ether. The organic layer was washed with a 10% v/v aqueous solution of acetic acid (2x50 ml), a solution of sodium hydrogen carbonate and brine ,dried and evaporated obtaining the crude intermediate (3S ,4R,3'S)-1-tert-butyldimethylsilyl-3-[(R)-1-(tert-butyldimethylsilyloxy)ethyl]-4-[3'-(4'-diethoxyphosphinyloxytetrahydropyran-4'-ene)] azetidin -2-one (2g; Rf = 0.2 in diethyl ether). To an ice-cold solution of the obtained crude compound (1.5g) in dichloromethane (45ml), was added MCPBA 55% (2.19g). The reaction mixture was stirred at 0^{o}C for 30min and at room temperature for 43h, the solvent removed and the mixture was dissolved in ethyl acetate. The solution was poured in to an ice-cold 3% aqueous sodium sulphite solution (1x 80ml), washed with a dilute ice-cold solution of sodium hydroxide (2x60 ml), water and brine (3x100 ml), and dried. The solution was evaporated to give an oil which was purified on silica gel using ethylacetate, to afford the title compound (1.47 g; Rf=0.2 in diethyl ether) that was used directly in the next step.
¹H-NMR (200MHz) δ (CDCl₃): 4.42-3.35 (m); 3.25 (dd); 2.9-2.6 (m);1.45-1.2( m); 1.25 (d); 0.99 (s) ; 0.88 (s); 0.3-0.2 ( different s) ; 0.1-0.05 (different s)ppm.

### Example 12

### (3S,4R,3'S,4'S,5'S)-3-[(R)-1-(tert-butyldimethylsilyloxy)ethyl]-4-[3'-(4'-diethoxyphosphinyloxytetrahydropyran-4'-ene oxide)] azetidin-2-one

Example 11 (1.47g) was dissolved at room temperature in methanol (60ml) and treated with potassium fluoride (147mg). The reaction mixture was stirred for 1 hr, then the solvent was partially evaporated under reduced pressure. The obtained thick suspension was poured into a saturated ammonium chloride solution (100 ml) and extracted with diethyl ether. The organic layer was washed with brine , dried and evaporated. The obtained crude compound was chromatographed on silica gel using ethylacetate as eluant, to afford the title compound (370 mg, Rf= 0.3 in ethylacetate)
¹H-NMR (200MHz) δ (CDCl₃): 6.4 (bs) 4.4-3.5 (m); 3.05 (dd); 2.7 (m);1.5-'1.2 (m); 0.9 (s); 0.1 (s) ppm.

### Example 13

### (3S,4R,3'R,5'S)-3-[(R)-1-(tert-butyldimethylsilyloxy)ethyl]-4-[5'-(3'-methoxy-4'-oxo-tetrahydropyranyl)]azetidin-2-one.

The Example 12 (370mg) was dissolved in methanol (15ml) and refluxed for 4h. Then the solvent was evaporated and the crude compound was dissolved in diethyl ether , washed with water and brine, dried and evaporated to give the title compound, as a white foam (190 mg; Rf=0.8 in ethyl acetate).
IR (CDCl₃) γmax (cm⁻¹):3414 (NH), 1765 (C=O lactam),1726 (C=O). ¹H-NMR δ (CDCl₃) : 5,73 (bs);; 4.42-4.28 (m); 4.28-4.1 (m); 3.93 (m); 3.619 ( t);3.522 (s);3.394 (t);2.926(dd); 2.96-2.86 (m);1.4-1.3(m); 1.25 (d); 0.97 (s ); 0.078 (s) ppm.

### Example 14

### (3S,4R,3'R)-3-[(R)-1-(tert-butyldimethylsilyloxy)ethyl]-4-[3'-(4'-diethoxyphosphinyloxytetrahydropyran-4'-ene)]azetidin-2-one.

A 1M solution of lithium bis(trimethylsilyl)amide in hexane (10.42 ml) was added to tetrahydrofuran (19.19 ml), the mixture was cooled to -70 ^{o}C under nitrogen, then the intermediate 5 (2.3 g), dissolved in tetrahydrofuran (12 ml), was added over 10 min. The obtained solution was stirred for 45min, then diethyl chlorophosphate (1.67ml) was added over 2min. The reaction mixture was stirred for 30 min, then poured into a saturated ammonium chloride solution and the resulting mixture extracted with diethyl ether. The organic layer was washed with a 10% v/v aqueous solution of acetic acid (2x50 ml), a solution of sodium hydrogen carbonate and brine, dried and evaporated obtaining the crude intermediate; (3S,4R,3' R)-1-tert-butyldimethylsilyl-3-[(R)-1-(tert-butyldimethylsilyloxy)ethyl]-4-[3'-(4'-diethoxyphosphinyloxy-tetrahydropyran-4'-ene)]azetidin-2-one, (2.95 g; Rf=0.45 in diethyl ether).The crude compound (2.95g) was dissolved at room temperature in methanol (77ml) and treated with potassium fluoride (673mg). The reaction mixture was stirred for 1h then the solvent was partially evaporated under reduced pressure. The obtained thick suspension was poured into a saturated a mmonium chloride solution and extracted with diethyl ether. The organic layer was washed with brine, dried and evaporated to give the crude compound as a yellow foam, which was chomatographed on silica gel using a mixture of ethyl acetate and diethyl ether as eluant (75/25) to afford the title compound (1.1 g; Rf=0.3 in ethylacetate).
IR (CDCl₃) γmax (cm⁻¹): 3420 (NH), 1759(C=O lactam),1680 (C=C). ¹H-NMR δ (CDCl₃) : 6.3 (bs); 6.23 (bs); 5.74-5.68 (m);5.68-5.56 (m); 4.3-4.1 ( m); 4.0-3.85 (m) ; 3.90-3.8 (m); 3.74-3.68 (dd); 3.0 (m);2.34-2.26 (m);1.37 (m); 1.24 (d); 0.88 (s)ppm.

### Example 15

### (3S,4R,3'R,4'S,5'S)-3-[(R)-1-(tert-butyldimethylsilyloxy)ethyl]-4-[3'-(4'-diethoxyphosphinyloxytetrahydropyran-4'-ene oxide)]azetidin-2-one

To an ice-cold solution of Example 14 (1.1g) in dichloromethane (41 ml), MCPBA (1.9 g) was added. The reaction mixture was stirred at 0⁰C for 30 min and at room temperature for 2 8 h, then the solvent was removed and the mixture was dissolved in ethyl acetate. The solution was poured in an ice-cold 3% aqueous sodium sulphite solution (2x 100 ml), washed with a dilute ice-cold solution of sodium hydroxide, water and brine, dried and evaporated to give a yellow oil which was purified on silica gel using ethyl acetate, to afford the title compound (1.04 mg; Rf=0.4 in ethyl acetate).
IR (CDCl₃) γmax (cm-1): 3418 (NH), 1759(C=O lactam). ¹H-NMR δ (CDCl₃) :6.547(bs); 4.26-4.06 (m); 3.92-3.82(m); 3.86-3.8(dd); 3.58 (t); 3.492 (d); 2.826 (m);2.39 (m) ; 1.38-1.31 (dt) 1.257(d); 1.24(d); 0.8 73 (s); 0.075 (s); 0.069 (s) ppm.

### Example 16

### (3S,4R,3'R,5'R)-3-[(R)-1-(tert-butyldimethylsilyloxy)ethyl]-4-[5'-(3'-methoxy-4'-oxotetrahydropyranyl)] azetidin-2-one.

The Example 15 (1.04mg) was dissolved in methanol (40 ml) and heated for 5h. Then the solvent was evaporated and the crude compound was dissolved in diethyl ether , washed with water and brine, dried and evaporated to give the crude compound purified by column chromatography (eluant diethylether/petroleum = 9/1) to afford the title compound as a white solid ( 200 mg; Rf=0.75 in ethyl acetate).
IR (CDCl₃) γmax (cm⁻¹): 3420 (NH), 1759(C=O lactam),1724(C=O). ¹H-NMR δ (CDCl₃) : 6.093 (bs); 4.214 (m); 4.26-4.16 (m); 4.147 (m); 3.734 (dd); 3.625 (dd);3.557 (t); 3.440(dd);3.376 (s); 3.158 (m) 2.808 (dd); 1213 (d); 0.88 (s); 0.079 (s); 0.064 (s)ppm.

### Example 17

### (3S,4R,3'R)-1-tert-butyldimethylsilyl-3-[(R)-1-(tert-butyldimethylsilyloxy)ethyl]-4-[3'-(4'diethoxyphosphinyloxy-tetrahydropyran-4'-ene oxide) azetidin-2-one

A 1M solution of lithium bis(trimethylsilyl)amide in hexane (10.42ml) was added to tetrahydrofuran (19.19ml), the mixture was cooled to -70⁰C under nitrogen, and the intermediate 5 (2.3g), dissolved in tetrahydrofuran (12 ml), was added over 10 min. The obtained solution was stirred for 45min, then diethyl chlorophosphate (1.67ml) was added over 2min. The reaction mixture was stirred for 30min, then poured into a saturated ammonium chloride solution and the resulting mixture extracte d with diethyl ether. The organic layer was washed with a 10 % v/v aqueous solution of acetic acid (2x50 ml), a solution of sodium hydrogen carbonate and brine, dried and evaporated to yield the crude intermediate (3S,4R,3'R)-1-tert-butyldimethylsilyl-3-[(R)-1-(tert-butyldimethylsilyloxy)ethyl]-4-[3'-(4'-diethoxyphosphinyloxy-tetrahydropyran-4'-ene)]azetidin-2-one, (2.95 g; Rf=0.45 in diethyl ether). To an ice-cold solution of the crude intermediate (1.3 g) in dichloromethane (50ml) MCPBA 55% (2.33 g) was added. The reaction mixture was stirred at 0⁰C for 30min and at room temperature for 5 days. Additional MCPBA (0.4g) was then added and the reaction mixture was stirred for 2 days. The solvent was removed and the mixture was dissolved in ethyl acetate(130 ml). The solution was poured in an ice-cold 3% aqueous sodium sulphite solution (2x100 ml), washed with a dilute ice-cold solution of sodium hydroxide (2x100 ml), water and brine(3x100 ml), dried and evaporated to give an oil wich was purified on silica gel (diethylether/petroleum=8/2) to afford the title compound (763 mg; Rf=0.57).
IR (CDCl₃) γmax (cm⁻¹): 1740 (C=O lactam). ¹H-NMR δ (CDCl3): 4.32-4.1 (m); 4.12-4.06 (dd); 3.91-3.70 (dd); 3.88-3.86 (m) ;3.47 (m); 2.77(m); 1.38-1.31(m); 1.18 (d); 0.94 (s);0.88(s); 0.25 (s); 0.08 (s); 0.06(s) ppm.

### Example 18

### (3S,4R,3'R,4'R,5'R)-3-[(R)-1-(tert-butyldimethylsilyloxy)ethyl]-4-[3'-(4'-diethoxyphosphinyloxytetrahydropyran-4'-ene oxide)] azetidin-2-one.

Example 17 (753mg) was dissolved at room temperature in methanol (30ml) and treated with potassium fluoride (73.7 mg). The reaction mixture was stirred for 1hr, then the solvent was partially evaporated under reduced pressure. The obtained thick suspension was poured into a saturated ammonium chloride solution (100ml) and extracted with diethyl ether. The organic layer was washed with brine(100 ml), dried and evaporated to yield the title compound (606 mg, R f=0.2 in ethylacetate).

### Example 19

### (3S,4R,3'S,5'R)-3-[(R)-1-(tert-butyldimethylsilyloxy)ethyl]-4-[5'-(3'-methoxy-4'-oxo-tetrahydropyranyl)]azetidin-2-one.

Example 18 (606mg) was dissolved in methanol (40 ml) and refluxed for 2h. Then the solvent was evaporated and the crude compound was dissolved in diethyl ether, washed with water and brine (2x100 ml), dried and evaporated to give the title compound as a white solid (415 mg; Rf=0.4 (in diethyl ether /ethylacetate 1/1).
IR (CDCl₃) γmax (cm⁻¹): 3430 (NH), 1761 (C=O lactam),1726 (C=O). ¹H-NMR δ (CDCl3) : 6.06(s); 4.40 (ddd); 4.23 (ddd); 4.13 (m); 3.93 (ddd); 3.61 (dd); 3.52 (s);3.46-3.28 (m); 2.82-2.70 (m); 1.21 (d); 0.87 (s); 0.07 (s); 0.05 (s) ppm.

## Claims

1. Compounds of the general formula (I) 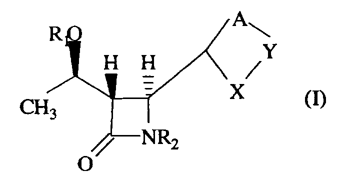 in which R₁ represents a hydrogen atom or a hydroxyl protecting group; R₂ represents a hydrogen atom, or a trialkylsilyl group; A represents the group (CH₂)_{q}B(CH₂)ₚ wherein B represents oxygen (O), NH or a substituted or protected derivative thereof, or S(O)ₙ wherein n is zero 1, or 2; q is zero or an integer from 1 to 4; p is zero or an integer from 1 to 4; with the proviso that the sum of p + q is an integer from 1 to 4; or B represents a bond and the sum of p + q is 2, 4 or 5; and -X-Y represents the alkene group (II) or the epoxide group (III). 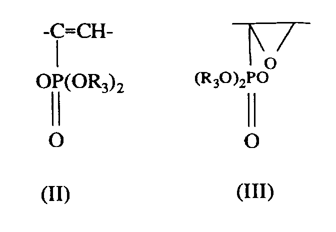 wherein R₃ represents a C₁₋₆alkyl group optionally substituted by halogen or an optionally substituted phenyl group.

2. Compounds as claimed in claim 1 wherein R₁ is trialkylsilyl.

3. Compounds as claimed in claims 1 or 2 wherein R₂ is hydrogen or t-butyldimethylsilyl.

4. Compounds as claimed in any of claims 1 to 3 wherein R₃ is ethyl.

5. Compounds as claimed in any of claims 1 to 4 wherein A is -CH₂CH₂-.

6. Compounds as claimed in any of claims 1 to 4 wherein A is -CH₂OCH₂-.

7. Compounds as claimed in any of claims 1 to 6 having the configuration:

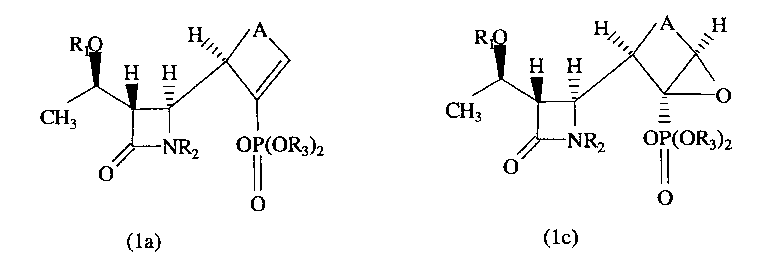

8. A process for the preparation of compounds of formula (I) wherein -X-Y- the alkene group (II) which comprises:
(a) reacting a compound of formula (IV) wherein R₁ represents a hydroxyl protecting group and R₂ is trialkylsilyl 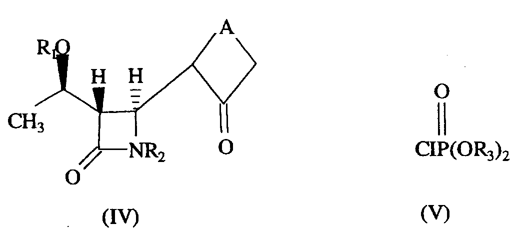 with the chlorophosphate (V) in the presence of a strong base, followed if desired by removal of the trialkysilyl protecting group R₂.
(b) epoxidation of a compound of formula (I) wherein R₁ is a hydroxyl protecting and X-Y is the alkene group (II) to yield the corresponding compound of formula (I) wherein X-Y represents the group (III) followed if necessary or desired by removal of the protecting group R₂.
